# EUROPEAN PATENT APPLICATION

(11) **EP 4 134 837 A2**
(43) Date of publication of application: **15.02.2023**
(21) Application number: 22215544.2
(22) Date of filing: 21.12.2022
(51) Int. Cl.: G06F 16/29

(54) **METHOD AND APPARATUS FOR DISCOVERING A NEWLY ADDED ROAD**

(30) Priority: 27.12.2021 CN 202111616109
(71) Applicant: Beijing Baidu Netcom Science Technology Co., Ltd., Beijing 100085 (CN)
(72) Inventor: XU, Qiuyang, Beijing, 100085 (CN); CAO, Tingting, Beijing, 100085 (CN); LU, Zhen, Beijing, 100085 (CN)
(74) Representative: advotec.

(57) **Abstract**

Aspects of the present invention are directed to a method for discovering a newly added road, including: determining trajectory data in a target area within a preset time period, in which the trajectory data includes a plurality of trajectories and attribute information of each trajectory point in respective trajectories; determining trajectory features of a plurality of grids in the target area, according to the plurality of trajectories, the attribute information of each trajectory point in respective trajectories, and position features of the plurality of grids; generating current grid portrait data of the target area, according to the position features and trajectory features of the plurality of grids; and determining newly added road information of the target area, according to the current grid portrait data and historical grid portrait data of the target area.

## Description

### TECHNICAL FIELD

The present invention relates to the technical field of artificial intelligence, in particular to the technical fields of automatic driving, cloud computing, intelligent transportation, and natural language processing, and in particular to a method and an apparatus for discovering a newly added road.

### BACKGROUND

In the related art, the method for discovering a newly added road is mainly to compare remote sensing images collected by sensors at different time points for the same area, for example, image overlay detection processing, image data difference or ratio processing, etc., determine differences between the remote sensing images of different times, and determine newly added roads in the area according to the differences, which takes a long time and is inefficient.

### SUMMARY

The present invention provides a method and an apparatus for discovering a newly added road.

According to an aspect of the present invention, there is provided a method for discovering a newly added road, including: determining trajectory data in a target area within a preset time period, in which the trajectory data includes a plurality of trajectories and attribute information of each trajectory point in respective trajectories; determining trajectory features of a plurality of grids in the target area, according to the plurality of trajectories, the attribute information of each trajectory point in respective trajectories, and position features of the plurality of grids; generating current grid portrait data of the target area, according to the position features and trajectory features of the plurality of grids; and determining newly added road information of the target area, according to the current grid portrait data and historical grid portrait data of the target area.

Optionally, determining the trajectory features of the plurality of grids in the target area according to the plurality of trajectories, the attribute information of each trajectory point in respective trajectories, and position features of the plurality of grids includes: determining for each trajectory, a grid to which each trajectory point in the trajectory belongs according to the attribute information of each trajectory point in the trajectory and the position features of the plurality of grids; and determining for each grid, the trajectory features of the grid according to the attribute information of the trajectory points belonging to the grid.

Optionally, the attribute information includes position information, determining for each trajectory, the grid to which each trajectory point in the trajectory belongs according to the attribute information of each trajectory point in the trajectory and the position features of the plurality of grids includes: determining for each trajectory point in each trajectory, a grid of which corresponding position feature matches the position information according to the position information of the trajectory point and the position features of the plurality of grids; and determining the matched grid as the grid to which the trajectory point belongs.

Optionally, the attribute information further includes a trajectory identifier, grid features include a trajectory flux, and determining for each grid, the trajectory features of the grid according to the attribute information of the trajectory points belonging to the grid includes: determining for each grid, the number of trajectories passing through the grid according to the trajectory identifiers of the trajectory points belonging to the grid; and determining the number of trajectories as the trajectory flux of the grid.

Optionally, before determining for each trajectory, the grid to which each trajectory point in the trajectory belongs according to the attribute information of each trajectory point in the trajectory and the position features of the plurality of grids, the method further includes: performing for each trajectory, linear interpolation on the trajectory points in the trajectory.

Optionally, the trajectory features include a trajectory flux, determining the newly added road information of the target area according to the current grid portrait data and the historical grid portrait data of the target area, includes: determining current binary portrait data according to the grid flux of each grid in the current grid portrait data and a preset flux threshold, in which a first value in the current binary portrait data represents that the grid flux of the corresponding grid is greater than or equal to the preset flux threshold; determining historical binary portrait data according to the historical grid portrait data; determining at least one target grid according to the current binary portrait data and the historical binary portrait data, in which a value of the target grid in the current binary portrait data is different from the value of the target grid in the historical binary portrait data; and determining the newly added road information of the target area according to the at least one target grid.

Optionally, the grid features further include a direction feature and a speed feature, which are determined according to direction information and speed information of the trajectory points belonging to the grid, determining the newly added road information of the target area according to the at least one target grid, includes: determining at least one candidate newly added road information of the target area according to the at least one target grid; and selecting the newly added road information of the target area from the at least one candidate newly added road information, according to the direction feature and speed feature of the at least one target grid.

Optionally, after determining the newly added road information of the target area according to the current grid portrait data and the historical grid portrait data of the target area, the method further includes: determining remote sensing image data of the target area; determining whether a road corresponding to the newly added road information really exists, according to the remote sensing image data; and updating a road map of the target area according to the newly added road information, when it is determined that the road really exists.

According to another aspect of the present invention, there is provided an apparatus for discovering a newly added road, including: a first determining module, configured to determine trajectory data in a target area within a preset time period, in which the trajectory data includes a plurality of trajectories and attribute information of each trajectory point in respective trajectories; a second determining module, configured to determine trajectory features of a plurality of grids in the target area, according to the plurality of trajectories, the attribute information of each trajectory point in respective trajectories, and position features of the plurality of grids; a generating module, configured to generate current grid portrait data of the target area, according to the position features and trajectory features of the plurality of grids; and a third determining module, configured to determine newly added road information of the target area, according to the current grid portrait data and historical grid portrait data of the target area.

Optionally, the second determining module includes a first determining unit and a second determining unit. The first determining unit is configured to determine for each trajectory, a grid to which each trajectory point in the trajectory belongs according to the attribute information of each trajectory point in the trajectory and the position features of the plurality of grids. The second determining unit is configured to determine for each grid, the trajectory features of the grid according to the attribute information of the trajectory points belonging to the grid.

Optionally, the attribute information includes position information. The first determining unit is further configured to: determine for each trajectory point in each trajectory, a grid of which corresponding position feature matches the position information according to the position information of the trajectory point and the position features of the plurality of grids; and determine the matched grid as the grid to which the trajectory point belongs.

Optionally, the attribute information further includes a trajectory identifier, and the grid features include a trajectory flux. The second determining unit is further configured to: determine for each grid, the number of trajectories passing through the grid according to the trajectory identifiers of the trajectory points belonging to the grid; and determine the number of trajectories as the trajectory flux of the grid.

Optionally, the second determining module further includes an interpolation processing unit, configured to perform for each trajectory, linear interpolation on the trajectory points in the trajectory.

Optionally, the trajectory features include a trajectory flux. The third determining module is further configured to: determine current binary portrait data according to the grid flux of each grid in the current grid portrait data and a preset flux threshold, in which a first value in the current binary portrait data represents that the grid flux of the corresponding grid is greater than or equal to the preset flux threshold; determine historical binary portrait data according to the historical grid portrait data; determine at least one target grid according to the current binary portrait data and the historical binary portrait data, in which a value of the target grid in the current binary portrait data is different from the value of the target grid in the historical binary portrait data; and determine the newly added road information of the target area according to the at least one target grid.

According to yet another aspect of the present invention, there is provided a computer readable storage medium storing computer instructions. The computer instructions are configured to enable the computer to implement the method for discovering a newly added road of the aspect of the present invention.

It should be understood that what is described in this section is not intended to identify key or critical features of embodiments of the disclosure, nor is it intended to limit the scope of the disclosure. Other features of the present invention will become readily understood from the following description.

### BRIEF DESCRIPTION OF THE DRAWINGS

The drawings are used to better understand the scheme of the present invention and do not constitute a limitation thereof.
FIG. 1 is a schematic diagram according to a first embodiment of the present invention.
FIG. 2 is a schematic diagram of determining newly added road information based on current grid portrait data.
FIG. 3 is a schematic diagram according to a second embodiment of the present invention.
FIG. 4 is a schematic diagram of determining current grid portrait data.
FIG. 5 is a schematic diagram according to a third embodiment of the present invention.
FIG. 6 is a block diagram of an electronic device implementing embodiments of the present invention.

### DETAILED DESCRIPTION

Exemplary embodiments of the present invention are described below with reference to the accompanying drawings, which include various details of the embodiments of the present invention to facilitate understanding and should be considered as exemplary only. Accordingly, those of ordinary skill in the art will recognize that various changes and modifications of the embodiments described herein can be made without departing from the scope of the present invention. Also, descriptions of well-known functions and constructions are omitted from the following description for clarity and conciseness.

In the related art, the method for discovering a newly added road is mainly to compare remote sensing images collected by sensors at different time points for the same area, for example, image overlay detection processing, image data difference or ratio processing, etc., determine differences between the remote sensing images of different times, and determine newly added roads in the area according to the differences, which takes a long time and is inefficient.

In view of the above problems, the present invention provides a method and an apparatus for discovering a newly added road, and electronic device.

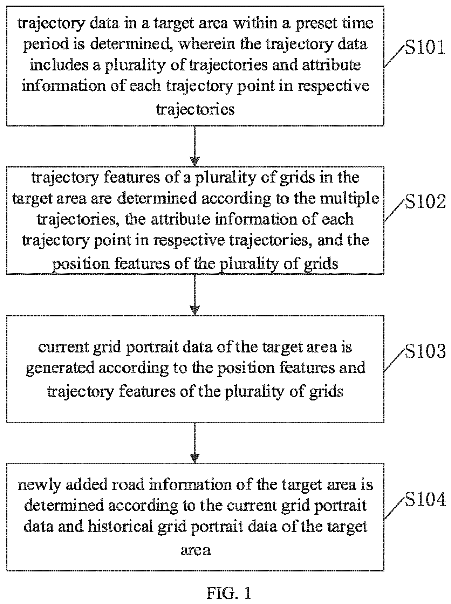

FIG. 1 is a schematic diagram according to a first embodiment of the present invention. It should be noted that the method for discovering a newly added road in the embodiment of the present invention can be applied to an apparatus for discovering a newly added road, and the apparatus can be configured in an electronic device to enable the electronic device to perform the function of discovering a newly added road.

The electronic device may be any device with computing capability. The device with computing capability may be, for example, a personal computer (PC), a mobile terminal, a server, etc., and the mobile terminal may be, for example, a hardware device having various operating systems, touch screens and/or displays, such as an onboard device, a mobile phone, a tablet computer, a personal digital assistant, a wearable device, etc.

As illustrated in FIG. 1, the method for discovering a newly added road may include the following steps:
In S 101, trajectory data in a target area within a preset time period is determined, in which the trajectory data includes a plurality of trajectories and attribute information of each trajectory point in respective trajectories.

In the embodiment of the present invention, the preset time period may be, for example, 1 day, 2 days, 15 days, 1 month, etc., and may be set according to actual needs.

In the embodiment of the present invention, the trajectory data in the target area within the preset time period refers to the trajectory data of any vehicle driving in the target area within the preset time period. The trajectory data can be collected by the controller on the vehicle during the driving of the vehicle. The trajectory in the trajectory data may be obtained by dividing the moving trajectory of any vehicle in a long period of time according to the speed and the like.

In the embodiment of the present invention, the attribute information of each trajectory point in the trajectory may include at least one of: position information, trajectory identifier, direction information, and speed information. After determining the trajectory data in the target area within the preset time period, the trajectory data may be filtered to improve the accuracy of the trajectory data, for example, the trajectory data of the subway, the trajectory data of the train and the like are filtered out. In addition, the trajectory data in which the speed is abnormal can also be filtered out.

It should be noted that, in the solution of the present invention, the acquisition, storage and application of the involved trajectory data all comply with the provisions of relevant laws and regulations, and do not violate public order and good customs.

In S102, trajectory features of a plurality of grids in the target area are determined according to the multiple trajectories, the attribute information of each trajectory point in respective trajectories, and the position features of the plurality of grids.

In the embodiment of the present invention, the target area may be divided according to a specified grid size to obtain a plurality of grids. The size information of the plurality of grids is the same, for example, both are 2m long and 2m wide. The position feature of the grid, i.e., position information of the grid, may be represented by a upper left corner coordinate, lower left corner coordinate, upper right corner coordinate, lower right corner coordinate, or center point coordinate of the grid.

In the embodiment of the present invention, the attribute information of the trajectory points may include the position information of the trajectory points. According to the position information of the trajectory points and the position feature of the grid, correspondence relationships between the trajectory points and the grid may be determined, and then the trajectory features of the grid are determined according to the trajectory points corresponding to the grid.

In S103, current grid portrait data of the target area is generated according to the position features and trajectory features of the plurality of grids.

In the embodiment of the present invention, the current grid portrait data of the target area includes the position features and trajectory features of the plurality of grids. In order to facilitate the storage of the current grid portrait data and further facilitate subsequent processing, the current grid portrait data may be stored in a matrix storage mode, for example, in the matrix storage mode of Ndarray. In addition, in order to reduce the storage amount of the current grid portrait data, the current grid portrait data may be compressed according to the zlib compression mode, and transcoding processed by using a base64 transcoding mode, and the result of transcoding processing is stored. The zlib compression is to perform Huffman encoding on the current grid portrait data to obtain a binary encoding result. The base64 transcoding is to perform string conversion processing on the binary encoding result to prevent problems when reading the binary encoding result.

In the embodiment of the present invention, in order to further improve the accuracy of the newly added road information, the current grid portrait data and the historical grid portrait data may be processed with at least one of Gaussian smoothing, high-pass filtering, and median filtering and so on, to filter out interference information such as noise in the data.

In S 104, newly added road information of the target area is determined according to the current grid portrait data and historical grid portrait data of the target area.

In the embodiment of the present invention, the current grid portrait data is generated according to the trajectory data in the target area within a preset time period, the historical grid portrait data may be generated according to the trajectory data in the target area within the historical time period. The preset time period and the historical time period may be separated by a time period, or may be adjacent. Whether the preset time period and the historical time period are adjacent or separated by a time period can be set according to actual needs. For example, assuming that the current time point is May 30, the preset time period can be the time period from May 20 to May 30, the historical time period can be the time period from May 1 to May 10, or the time period from May 10 to May 20.

In the embodiment of the present invention, in order to reduce the amount of calculation and improve the accuracy of the determined newly added road information, the process of performing S 104 by the apparatus for discovering a newly added road may include, for example: determining current binary portrait data according to the grid flux of each grid in the current grid portrait data and a preset flux threshold, in which a first value in the current binary portrait data represents that the grid flux of the corresponding grid is greater than or equal to the preset flux threshold; determining historical binary portrait data according to the historical grid portrait data; determining at least one target grid according to the current binary portrait data and the historical binary portrait data, in which a value of the target grid in the current binary portrait data is different from the value of the target grid in the historical binary portrait data; determining the newly added road information of the target area according to the at least one target grid.

The process of determining the current binary portrait data may be, for example, for each grid, when the grid flux of the grid in the current grid portrait data is greater than or equal to the preset flux threshold, determining the value of the grid in the current binary portrait data to be the first value; when the grid flux of the grid in the current grid portrait data is less than the preset flux threshold, determining the value of the grid in the current binary portrait data to be the second value. For example, the first value may be 1, and the second value may be 0.

The process of determining the historical binary portrait data may be, for example, for each grid, when the grid flux of the grid in the historical grid portrait data is greater than or equal to a preset flux threshold, determining the value of the grid in the historical binary portrait data to be the first value; when the grid flux of the grid in the historical grid portrait data is less than the preset flux threshold, determining the value of the grid in the historical binary portrait data to be the second value.

In the embodiment of the present invention, in order to reduce the amount of calculation and improve the accuracy of the determined newly added road information, the grid features further include a direction feature and a speed feature, which are determined according to the direction information and speed information of the trajectory points belonging to the grid. The information is determined and obtained; the process of determining the newly added road information by the apparatus for discovering a newly added road may include, for example: determining at least one candidate newly added road information of the target area according to the at least one target grid; selecting the newly added road information of the target area from the at least one candidate newly added road information, according to the direction feature and speed feature of the at least one target grid.

The at least one candidate newly added road information may be, for at least one target grid, combining at least one target grid according to the rule that adjacent grids belong to the same road to obtain candidate newly added road information. However, the rule may not be adopted in the situations like a two-way road, high-speed auxiliary roads, etc. For example, in the case of a two-way road, there may be two adjacent grids, one on a road in one direction of a two-way road, and the other on a road in the other direction of the two-way road. For another example, in the case of a high-speed auxiliary road, it is possible that one grid on the high-speed road is adjacent to another grid on the auxiliary road. Therefore, in order to avoid the above situations and further improve the accuracy of the determined newly added road information, the newly added road information of the target area may be selected from the at least one candidate newly added road information according to the direction feature and speed feature of at least one target grid, ensuring that the direction features of respective target grids in the newly added road information are the same or in the same direction range, and the difference in the speed features of respective target grids in the newly added road information is not too large.

In the embodiment of the present invention, in order to further improve the accuracy of the newly added road information, the newly added road information may be verified in combination with remote sensing images and the like. Correspondingly, after S104, the method may further include: determining remote sensing image data of the target area; determining whether a road corresponding to the newly added road information really exists, according to the remote sensing image data; and updating a road map of the target area according to the newly added road information, when it is determined that the road really exists.

Since the road information in the remote sensing image data is generally vector road information, the newly added road information may be vectorized, that is, combined with the position information and the like of each target grid in the new road information, so as to determine the shape and position of the newly added road information, and then determine the corresponding newly added vector road information. In addition, the newly added time point of the newly added road information, that is, the current time point, can also be determined, so as to know the updated time point of the road information.

The process of vectorizing the newly added road information may include, for example, using the zhang-suen refinement algorithm to extract backbone information in the newly added road information, using the opening and closing processing combined algorithm to perform edge smoothing processing on the backbone information, and using convolution mode to denoise the backbone information, and then generating the vector newly added road information according to the processed backbone information.

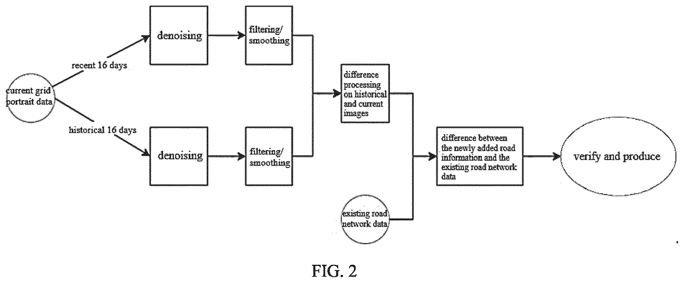

FIG. 2 is a schematic diagram of determining newly added road information based on current grid portrait data. As illustrated in FIG. 2, the data for the recent 16 days (current grid portrait data) and the data for the historical 16 days (historical grid portrait data) are obtained, and performed with denoising, filtering, and smoothing processing respectively, and the historical and current images are difference processed (the two processing results are compared by difference), the newly added road information is determined, and combined with the existing road network data (remote sensing image data) to make the difference, so as to verify whether the road corresponding to the newly added road information really exists.

Generally, through determining the trajectory data in the target area within the preset time period, in which the trajectory data includes a plurality of trajectories and the attribute information of each trajectory point in respective trajectories, determining the trajectory features of the plurality of grids in the target area according to the plurality of trajectories, the attribute information of each trajectory point in respective trajectories, and position features of the plurality of grids, generating the current grid portrait data of the target area according to the position features and trajectory features of the plurality of grids, and determining the newly added road information of the target area according to the current grid portrait data and the historical grid portrait data of the target area, the newly added road can be found in time, with short time and high efficiency.

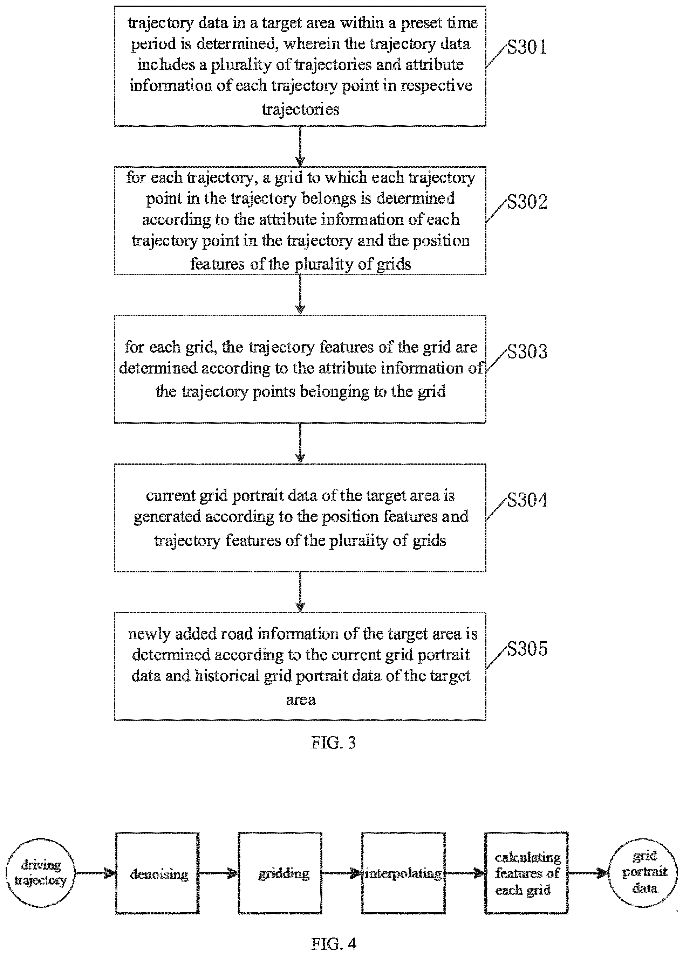

In order to accurately determine the trajectory features of the grid and thereby further improve the accuracy of the determined new road information, as illustrated in FIG. 3, which is a schematic diagram according to a second embodiment of the present invention, in the embodiment of the present invention, the grid to which the trajectory points belong is determined at first, and then for the grid, the trajectory features of the grid are determined based on the trajectory points belonging to the grid. The embodiment as illustrated in FIG. 3 may include the following steps:
In S301, trajectory data in a target area within a preset time period is determined, in which the trajectory data includes a plurality of trajectories and attribute information of each trajectory point in respective trajectories.

In S302, for each trajectory, a grid to which each trajectory point in the trajectory belongs is determined according to the attribute information of each trajectory point in the trajectory and the position features of the plurality of grids.

In the embodiment of the present invention, the process of performing S302 by the apparatus a discovering the newly added road may include, for example, determining for each trajectory point in each trajectory, a grid of which corresponding position feature matches the position information according to the position information of the trajectory point and the position features of the plurality of grids; and determining the matched grid as the grid to which the trajectory point belongs.

The position feature of the grid is used to position an area, the position information of the trajectory point is used to position a point. The matching between the position feature and the position information may represent that the point positioned by the position information is located in the area positioned by the position feature. Through the matching of positions, the grid to which the trajectory point belongs can be accurately determined, and then a plurality of grids that the trajectory passes through can be determined.

In the embodiment of the present invention, due to the collection period of the trajectory points, there may be a situation that the grids to which two adjacent trajectory points in the trajectory belong are not adjacent, that is, it is impossible to accurately determine all the grids that the trajectory passes through based on the grids to which the trajectory points belong, and the collection of trajectory points may not be performed on some of the grids that the trajectory passes through, thus some of the grids that the trajectory passes through may be missed. Therefore, in order to accurately determine all the grids that the trajectory passes through, an interpolation processing may be performed on the trajectory points in the trajectory. Therefore, before S302, the method may further include: for each trajectory, performing linear interpolation on the trajectory points in the trajectory.

In S303, for each grid, the trajectory features of the grid are determined according to the attribute information of the trajectory points belonging to the grid.

In the embodiment of the present invention, the attribute information may further include a trajectory identifier, the grid features may include a trajectory flux. Correspondingly, the process of performing S303 by the apparatus for discovering a newly added road may include, for example, for each grid, the number of trajectories passing through the grid is determined according to the trajectory identifiers of the trajectory points belonging to the grid; the number of trajectories is determined as the trajectory flux of the grid. The number of trajectories can accurately characterize the trajectory flux of the grid and improve the accuracy of determining the trajectory features of the grid.

The attribute information may further include direction information and speed information. Correspondingly, the trajectory features of the grid may also include at least one of: a maximum velocity of trajectory points in all directions in the grid, a minimum velocity of trajectory points in all directions, an average velocity of trajectory points in all directions, a maximum velocity of trajectory points in a single direction, a minimum velocity of trajectory points in a single direction, a minimum velocity of trajectory points in a single direction, an average velocity of trajectory points in a single direction, a trajectory flux in a single direction. The single directions, for example, east, west, south, north, southeast, northeast, southwest, northwest, etc., may be set according to actual needs. The above trajectory features can be used in scenarios such as road direction excavation, road centerline change monitoring, and construction discovery.

In S304, current grid portrait data of the target area is generated according to the position features and trajectory features of the plurality of grids.

FIG. 4 is a schematic diagram of determining current grid portrait data. As illustrated in FIG. 4, the driving trajectory (trajectory data) is denoised, then gridded (determining the grid to which the trajectory point belongs), and then interpolated (the trajectory points in the trajectory are interpolated), and the trajectory points obtained by interpolation are gridded; then the features of each grid are determined based on the trajectory data and the grid to which the trajectory point belongs, and grid portrait data (current grid portrait data) are then generated.

In S305, newly added road information of the target area is determined according to the current grid portrait data and historical grid portrait data of the target area.

It should be noted that, the process of performing S301, S304 and S305 may be implemented in any of the various embodiments of the present invention, which are not limited in this embodiment of the present invention, and will not be described again.

Generally, through determining the trajectory data in the target area within the preset time period, in which the trajectory data includes a plurality of trajectories and the attribute information of each trajectory point in respective trajectories; for each trajectory, determining the grid to which each trajectory point in the trajectory belongs according to the attribute information of each trajectory point in the trajectory and the position features of the plurality of grids; for each grid, determining the trajectory features of the grid according to the attribute information of the trajectory points belonging to the grid; generating the current grid portrait data of the target area according to the position features and trajectory features of the plurality of grids; and determining the newly added road information of the target area according to the current grid portrait data and the historical grid portrait data of the target area, the newly added road can be found in time, with short time and high efficiency.

In order to realize the above-mentioned embodiments, the present invention also provides an apparatus for discovering a newly added road.

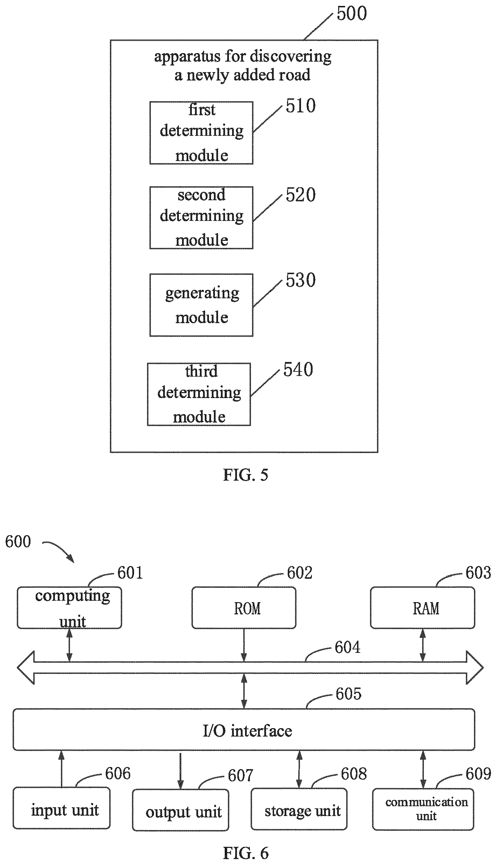

As shown in FIG. 5, which is a schematic diagram according to a third embodiment of the present invention, the apparatus 500 for discovering a newly added road includes: a first determining module 510, a second determining module 520, a generating module 530 and a third determining module 540.

The first determining module 510 is configured to determine trajectory data in a target area within a preset time period, in which the trajectory data includes a plurality of trajectories and attribute information of each trajectory point in respective trajectories.

The second determining module 520 is configured to generate current grid portrait data of the target area, according to the position features and trajectory features of the plurality of grids.

The generating module 530 is configured to generate current grid portrait data of the target area, according to the position features and trajectory features of the plurality of grids.

The third determining module 540 is configured to determine newly added road information of the target area, according to the current grid portrait data and historical grid portrait data of the target area.

As a possible implementation of the embodiment of the present invention, the second determining module 520 includes a first determining unit and a second determining unit. The first determining unit is configured to determine for each trajectory, a grid to which each trajectory point in the trajectory belongs according to the attribute information of each trajectory point in the trajectory and the position features of the plurality of grids. The second determining unit is configured to determine for each grid, the trajectory features of the grid according to the attribute information of the trajectory points belonging to the grid.

As a possible implementation of the embodiment of the present invention, the attribute information includes position information. The first determining unit is specifically configured to: determine for each trajectory point in each trajectory, a grid of which corresponding position feature matches the position information, according to the position information of the trajectory point and the position features of the plurality of grids; and determine the matched grid as the grid to which the trajectory point belongs.

As a possible implementation of the embodiment of the present invention, the attribute information further includes a trajectory identifier, and the grid features include a trajectory flux. The second determining unit is specifically configured to: determine for each grid, the number of trajectories passing through the grid according to the trajectory identifiers of the trajectory points belonging to the grid; and determine the trajectory number as the trajectory flux of the grid.

As a possible implementation of the embodiment of the present invention, the second determining module further includes an interpolation processing unit, which is configured to perform for each trajectory, linear interpolation on the trajectory points in the trajectory.

As a possible implementation of the embodiment of the present invention, the trajectory features include a trajectory flux. The third determining module 540 is specifically configured to: determine current binary portrait data according to the grid flux of each grid in the current grid portrait data and a preset flux threshold, in which a first value in the current binary portrait data represents that the grid flux of the corresponding grid is greater than or equal to the preset flux threshold; determine historical binary portrait data according to the historical grid portrait data; determine at least one target grid according to the current binary portrait data and the historical binary portrait data, in which a value of the target grid in the current binary portrait data is different from the value of the target grid in the historical binary portrait data; and determine the newly added road information of the target area according to the at least one target grid.

As a possible implementation of the embodiment of the present invention, the grid features further include a direction feature and a speed feature, which are determined according to the direction information and speed information of the trajectory points belonging to the grid. The third determining module 540 is specifically configured to determine at least one candidate newly added road information of the target area according to the at least one target grid, and select the newly added road information of the target area from the at least one candidate newly added road information according to the direction feature and speed feature of the at least one target grid.

As a possible implementation of the embodiment of the present invention, the apparatus further includes a fourth determining module, a fifth determining module, and an update processing module. The fourth determining module is configured to determine remote sensing image data of the target area. The fifth determining module is configured to determine whether a road corresponding to the newly added road information really exists, according to the remote sensing image data. The update processing module is configured to update a road map of the target area according to the newly added road information, when it is determined that the road really exists.

Generally, through determining the trajectory data in the target area within the preset time period, in which the trajectory data includes a plurality of trajectories and the attribute information of each trajectory point in respective trajectories, determining the trajectory features of the plurality of grids in the target area according to the plurality of trajectories, the attribute information of each trajectory point in respective trajectories, and the position features of the plurality of grids, generating current grid portrait data of the target area according to the position features and trajectory features of the plurality of grids, and determining the newly added road information of the target area according to the current grid portrait data and the historical grid portrait data of the target area, the newly added road can be found in time, with short time and high efficiency.

In the technical solutions of the present invention, the collection, storage, use, processing, transmission, provision and disclosure of the user's personal information involved are all carried out under the premise of obtaining the consent of the user, and are in compliance with the relevant laws and regulations, and do not violate public order and good morals.

According to embodiments of the present invention, the present invention also provides an electronic device, a readable storage medium, and a computer program product.

FIG. 6 illustrates a block diagram of an exemplary electronic device 600 to implement embodiments of the present invention. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are by way of example only, and are not intended to limit implementations of the disclosure described and/or claimed herein.

As illustrated in FIG. 6, the electronic device 600 includes a computing unit 601, which can perform various appropriate actions and processes according to a computer program stored in a read-only memory (ROM) 602 or a computer program loaded into a random access memory (RAM) 603 from a storage unit 608. In the RAM 603, various programs and data required for the operation of electronic device 600 can also be stored. The computing unit 601, ROM 602 and RAM 603 are connected to each other through the bus 604. The input/output (I/O) interface 605 is also connected to the bus 604.

Various components in the electronic device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, modem, wireless communication transceiver, etc. The communication unit 609 allows the electronic device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include, but are not limited to, a central processing unit (CPU), a graphics processing unit (GPU), various specialized artificial intelligence (AI) computing chips, various computing units that run machine learning model algorithms, a digital signal processing processor (DSP), and any suitable processor, controller, microcontroller, etc. The computing unit 601 executes the various methods and processes described above, such as a method for discovering a newly added road. For example, in some embodiments, the method for discovering a newly added road may be implemented as a computer software program tangibly embodied on a machine-readable medium, such as the storage unit 608. In some embodiments, part or all of the computer program may be loaded and/or installed on the electronic device 600 via the ROM 602 and/or the communication unit 609. When the computer program is loaded into the RAM 603 and executed by the computing unit 601, one or more steps of the above-described method for discovering a newly added road may be performed. Alternatively, in other embodiments, the computing unit 601 may be configured by any other suitable means (e.g., by means of firmware) to perform the method for discovering a newly added road.

Various implementations of the systems and techniques described above may be implemented in digital electronic circuitry, integrated circuit systems, field programmable gate arrays (FPGAs), application specific integrated circuits (ASICs), application specific standard products (ASSPs), systems on chips system (SOC), load programmable logic device (CPLD), computer hardware, firmware, software, and/or combinations thereof. These various implementations may be implemented in one or more computer programs executable and/or interpretable on a programmable system including at least one programmable processor, which may be a special purpose or general-purpose programmable processor that may receive data and instructions from a storage system, at least one input device, and at least one output device, and transmit data and instructions to the storage system, the at least one input device, and the at least one output device.

Program codes for implementing the method of the present invention may be written in any combination of one or more programming languages. These program codes may be provided to a processor or controller of a general purpose computer, special purpose computer or other programmable data processing apparatus, such that the program code, when executed by the processor or controller, causes the functions/functions specified in the flowcharts and/or block diagrams to be performed. The program code can be executed completely on the machine, partially on the machine, partially on the machine as a separate software package and partially on the remote machine or completely on the remote machine or server.

In the context of the present invention, a machine-readable medium may be a tangible medium that may contain or store a program for use by or in connection with an instruction execution system, apparatus or device. The machine-readable medium may be a machine-readable signal medium or a machine-readable storage medium. The machine-readable medium may include, but are not limited to, electronic, magnetic, optical, electromagnetic, infrared, or semiconductor systems, apparatus, or devices, or any suitable combination thereof. More specific examples of machine-readable storage medium would include one or more wire-based electrical connections, a portable computer disk, a hard disk, a random access memory (RAM), a read only memory (ROM), an erasable programmable read-only memory (EPROM or flash memory), an optical fiber, a compact disk read only memory (CD-ROM), an optical storage, a magnetic storage, or any suitable combination thereof.

In order to provide interaction with a user, the systems and techniques described herein may be implemented on a computer having a display device (e.g., a CRT (cathode ray tube) or LCD (liquid crystal display) monitor) for displaying information to the user, a keyboard and pointing device (e.g., a mouse or trackball) through which the user can provide input to the computer. Other kinds of devices can also be used to provide interaction with the user, for example, the feedback provided to the user can be any form of sensory feedback (e.g., visual feedback, auditory feedback, or tactile feedback), and the input from the user can be received in any form (including acoustic input, voice input, or tactile input).

The systems and technologies described herein can be implemented in a computing system including background components (e.g., as a data server), or a computing system including middleware components (e.g., an application server), or a computing system including front-end components (for example, a user computer with a graphical user interface or a web browser through which the user can interact with the implementation of the system and technology described herein), or a computing system including any combination of such background components, middleware components, or front-end components. The components of the system may be interconnected by digital data communication (e. g., a communication network) in any form or medium. Examples of communication networks include local area networks (LANs), wide area networks (WANs), and the Internet.

A computer system may include a client and a server. The client and server are generally far away from each other and usually interact through the communication network. A client server relationship is generated by a computer program running on a corresponding computer and having a client server relationship with each other. The server can be an elastic compute service, a server of a distributed system, or a server combined with a blockchain.

It should be understood that steps may be reordered, added or deleted using the various forms of flow shown above. For example, the steps described in the present invention can be executed in parallel, sequentially, or in different orders. As long as the desired results of the technical solutions disclosed in the present invention can be achieved, no limitation is imposed herein.

The above-mentioned specific embodiments do not constitute a limitation on the protection scope of the present invention. It should be understood by those skilled in the art that various modifications, combinations, sub-combinations and substitutions may occur depending on design requirements and other factors. Any modifications, equivalent replacements, and improvements made within the principles of the present invention should be included within the protection scope of the present invention.

## Claims

1. A method for discovering a newly added road, comprising:
determining (S101, S301) trajectory data in a target area within a preset time period, wherein the trajectory data comprises a plurality of trajectories and attribute information of each trajectory point in respective trajectories;
determining (S102) trajectory features of a plurality of grids in the target area, according to the plurality of trajectories, the attribute information of each trajectory point in respective trajectories, and position features of the plurality of grids;
generating (S103, S304) current grid portrait data of the target area, according to the position features and trajectory features of the plurality of grids; and
determining (S104, S305) newly added road information of the target area, according to the current grid portrait data and historical grid portrait data of the target area.

2. The method according to claim 1, wherein determining the trajectory features of the plurality of grids in the target area according to the plurality of trajectories, the attribute information of each trajectory point in respective trajectories, and position features of the plurality of grids, comprises:
determining (S302) for each trajectory, a grid to which each trajectory point in the trajectory belongs according to the attribute information of each trajectory point in the trajectory and the position features of the plurality of grids; and
determining (S303) for each grid, the trajectory features of the grid according to the attribute information of the trajectory points belonging to the grid.

3. The method according to claim 2, wherein the attribute information comprises position information,
determining for each trajectory, the grid to which each trajectory point in the trajectory belongs according to the attribute information of each trajectory point in the trajectory and the position features of the plurality of grids, comprises:
determining for each trajectory point in each trajectory, a grid of which corresponding position feature matches the position information according to the position information of the trajectory point and the position features of the plurality of grids; and
determining the matched grid as the grid to which the trajectory point belongs.

4. The method according to claim 2 or 3, wherein the attribute information further comprises a trajectory identifier, grid features comprise a trajectory flux, and
determining for each grid, the trajectory features of the grid according to the attribute information of the trajectory points belonging to the grid, comprises:
determining for each grid, the number of trajectories passing through the grid according to the trajectory identifiers of the trajectory points belonging to the grid; and
determining the number of trajectories as the trajectory flux of the grid.

5. The method according to any one of claims 2-4, wherein, before determining for each trajectory, the grid to which each trajectory point in the trajectory belongs according to the attribute information of each trajectory point in the trajectory and the position features of the plurality of grids, the method further comprises:
performing for each trajectory, linear interpolation on the trajectory points in the trajectory.

6. The method according to any one of claims 1-5, wherein the trajectory features comprise a trajectory flux,
determining the newly added road information of the target area according to the current grid portrait data and the historical grid portrait data of the target area, comprises:
determining current binary portrait data according to the grid flux of each grid in the current grid portrait data and a preset flux threshold, wherein a first value in the current binary portrait data represents that the grid flux of the corresponding grid is greater than or equal to the preset flux threshold;
determining historical binary portrait data according to the historical grid portrait data;
determining at least one target grid according to the current binary portrait data and the historical binary portrait data, wherein a value of the target grid in the current binary portrait data is different from the value of the target grid in the historical binary portrait data; and
determining the newly added road information of the target area according to the at least one target grid.

7. The method according to claim 6, wherein the grid features further comprise a direction feature and a speed feature, which are determined according to direction information and speed information of the trajectory points belonging to the grid,
determining the newly added road information of the target area according to the at least one target grid, comprises:
determining at least one candidate newly added road information of the target area according to the at least one target grid; and
selecting the newly added road information of the target area from the at least one candidate newly added road information, according to the direction feature and speed feature of the at least one target grid.

8. The method according to any one of claims 1-7, wherein, after determining the newly added road information of the target area according to the current grid portrait data and the historical grid portrait data of the target area, the method further comprises:
determining remote sensing image data of the target area;
determining whether a road corresponding to the newly added road information really exists, according to the remote sensing image data; and
updating a road map of the target area according to the newly added road information, when it is determined that the road really exists.

9. An apparatus (500) for discovering a newly added road, comprising:
a first determining module (510), configured to determine trajectory data in a target area within a preset time period, wherein the trajectory data comprises a plurality of trajectories and attribute information of each trajectory point in respective trajectories;
a second determining module (520), configured to determine trajectory features of a plurality of grids in the target area, according to the plurality of trajectories, the attribute information of each trajectory point in respective trajectories, and position features of the plurality of grids;
a generating module (530), configured to generate current grid portrait data of the target area, according to the position features and trajectory features of the plurality of grids; and
a third determining module (540), configured to determine newly added road information of the target area, according to the current grid portrait data and historical grid portrait data of the target area.

10. The apparatus (500) according to claim 9, wherein the second determining module (520) comprises a first determining unit and a second determining unit;
the first determining unit is configured to determine for each trajectory, a grid to which each trajectory point in the trajectory belongs according to the attribute information of each trajectory point in the trajectory and the position features of the plurality of grids;
the second determining unit is configured to determine for each grid, the trajectory features of the grid according to the attribute information of the trajectory points belonging to the grid.

11. The apparatus (500) according to claim 10, wherein the attribute information comprises position information, and the first determining unit is further configured to:
determine for each trajectory point in each trajectory, a grid of which corresponding position feature matches the position information according to the position information of the trajectory point and the position features of the plurality of grids; and
determine the matched grid as the grid to which the trajectory point belongs.

12. The apparatus (500) according to claim 10 or 11, wherein the attribute information further comprises a trajectory identifier, and the grid features comprise a trajectory flux,
the second determining unit is further configured to:
determine for each grid, the number of trajectories passing through the grid according to the trajectory identifiers of the trajectory points belonging to the grid; and
determine the number of trajectories as the trajectory flux of the grid.

13. The apparatus (500) according to any one of claims 10-12, wherein the second determining module (520) further comprises an interpolation processing unit, configured to perform for each trajectory, linear interpolation on the trajectory points in the trajectory.

14. The apparatus (500) according to any one of claims 9-13, wherein the trajectory features comprise a trajectory flux, and the third determining module (540) is further configured to:
determine current binary portrait data according to the grid flux of each grid in the current grid portrait data and a preset flux threshold, wherein a first value in the current binary portrait data represents that the grid flux of the corresponding grid is greater than or equal to the preset flux threshold;
determine historical binary portrait data according to the historical grid portrait data;
determine at least one target grid according to the current binary portrait data and the historical binary portrait data, wherein a value of the target grid in the current binary portrait data is different from the value of the target grid in the historical binary portrait data; and
determine the newly added road information of the target area according to the at least one target grid.

15. A computer readable storage medium storing computer instructions, wherein the computer instructions are configured to enable the computer to implement the method of any of claims 1-8.
